Europäisches Patentamt

**European Patent Office**

**Office européen des brevets**

(11) Numéro de publication: **0 391 804**
**A1**

## DEMANDE DE BREVET EUROPEEN

(21) Numéro de dépôt: **90400934.7**

(22) Date de dépôt: **04.04.90**

(51) Int. Cl.5: **A01F 15/08, A01D 87/12, A01D 90/08**

(30) Priorité: **06.04.89 FR 8905071**

(43) Date de publication de la demande:
**10.10.90 Bulletin 90/41**

(84) Etats contractants désignés:
**AT BE CH DE DK ES FR GB GR IT LI LU NL SE**

(71) Demandeur: **DARIO S.A.**
**75, R. N. 20**
**F-31790 Saint Jory(FR)**

(72) Inventeur: **Dario, Yves**
**3, rue de Crimée**
**F-321200 Toulouse(FR)**

(74) Mandataire: **Ravina, Bernard**
**Cabinet Bernard RAVINA 24, boulevard**
**Riquet**
**F-31000 Toulouse(FR)**

(54) **Dispositif de chargement et de déchargement de balles cylindriques de paille ou de fourrage.**

(57) Le dispositif selon l'invention est destiné à équiper le châssis (1) des machines assurant le transport de balles de paille ou de fourrage ou leur enveloppement ou toutes autres opérations et se caractérise essentiellement en ce qu'il est constitué d'un berceau (4) basculant monté en articulation sur le châssis (1) et supportant par leurs extrémités deux rouleaux (5) parallèles espacés d'une distance inférieure au diamètre de la balle (3) à charger, d'au moins un moyen de verrouillage (6) du basculement du berceau (4) par rapport au châssis (1), d'un moyen de poussée et de blocage de la balle (3) contre au moins un rouleau (5) du berceau (4 ) placé en position basculée, d'un moyen d'actionnement du berceau (4) contre lequel est bloquée la balle (3), entre sa position basculée et sa position verrouillée pour le chargement de la dite balle et d'un moyen de retenue de la balle (3) sur le berceau (4) lors du basculement de ce dernier pour le déchargement de la dite balle.

Fig. 1

La présente invention a pour objet un dispositif de chargement et de déchargement de balles cylindriques de paille ou de fourrage destiné à équiper des machines assurant le transport des dites balles ou leur enveloppement ou toutes autres opérations.

Il est connu pour transporter les balles de paille ou de fourrage ou bien pour envelopper les dites balles d'utiliser pour leur chargemment et leur déchargement un système de fourche formée de deux rouleaux dont l'écartement est réglable.

Ces rouleaux se développent parallèlement à l'axe d'avance du véhicule portant la machine.

Les dits rouleaux sont rotatifs afin de faciliter le chargement et le déchargement des balles ou bien afin de faire tourner la balle sur elle-même en vue de son enveloppement par un film autoadhésif.

Ce type de système de chargement et de déchargement présente l'inconvénient de soumettre les rouleaux d'écartement réglable à d'importants efforts de flexion.

En effet, le poids important de la balle crée un porte à faux sur les rouleaux qui entraîne l'usure du montage de ceux-ci dans leurs paliers et à la longue la détérioration de ceux-ci.

Le chargement se fait en rapprochant les rouleaux l'un de l'autre alors que la balle est disposée entre eux.

Les balles de fourrage et de paille ont tendance à s'aplatir sous l'effet de leur poids.

Cette déformation peut entraîner, lors du rapprochement des rouleaux pour le chargement de la balle, le blocage du mouvement des dits rouleaux, ceux-ci ne pouvant soulever la balle car ils s'appuient sur des zones du pourtour de la balle quasiment parallèles du fait de la déformation.

De plus, la balle peut être détériorée sous l'effet du rapprochement des rouleaux sur une portion déformée.

D'autre part, lors du déchargement de la balle, il est nécessaire de veiller à retenir celle-ci surtout pour une balle enveloppée afin de ne pas déteriorer l'enveloppe et/ou de ne pas provoquer la formation de poche d'air entre l'enveloppe et la balle.

La présente invention vise à pallier à ces inconvénients et à atteindre les buts énoncés en proposant un dispositif de chargement et de déchargement de balles cyclindriques évitant une usure prématurée de ces éléments en répartissant les charges qu'ils supportent, remplissant ses fonctions de façon efficace quelle que soit la déformation des balles à manipuler et assurant un déchargement contrôlé.

A cet effet, le dispositif de chargement et de déchargement de balles cylindriques de paille ou de fourrage est monté sur un châssis solidarisé à un véhicule tracteur et se caractérise en ce qu'il est constitué d'un berceau basculant monté en articulation sur le châssis et supportant par leurs extrémités deux rouleaux parallèles espacés d'une distance inférieure au diamètre de la balle, d'au moins un moyen de verrouillage du basculement du berceau par rapport au châssis, d'un moyen de poussée et de blocage de la balle contre au moins un rouleau du berceau placé en position basculée, d'un moyen d'actionnement du berceau, contre lequel est bloquée la balle, entre sa position basculée et sa position verrouillée, pour le chargement de la dite balle et d'un moyen de retenue de la balle sur le berceau lors du basculement de ce dernier pour le déchargement de la dite balle.

D'autres avantages et caractéristiques apparaitront dans la description de l'invention illustrée aux dessins annexés donnés à titre d'exemple non limitatifs en lesquels :

    - la figure 1 est une vue de côté du dispositif selon l'invention,

    - la figure 2 est une vue de dessus selon la figure 1,

    - la figure 3 est une vue schématique du moyen de verrouillage du berceau par rapport au châssis.

    - la figure 4 est une vue de côté d'une machine à envelopper les balles équipée du dispositif selon l'invention,

    - la figure 5 est une vue de détail de la figure 4.

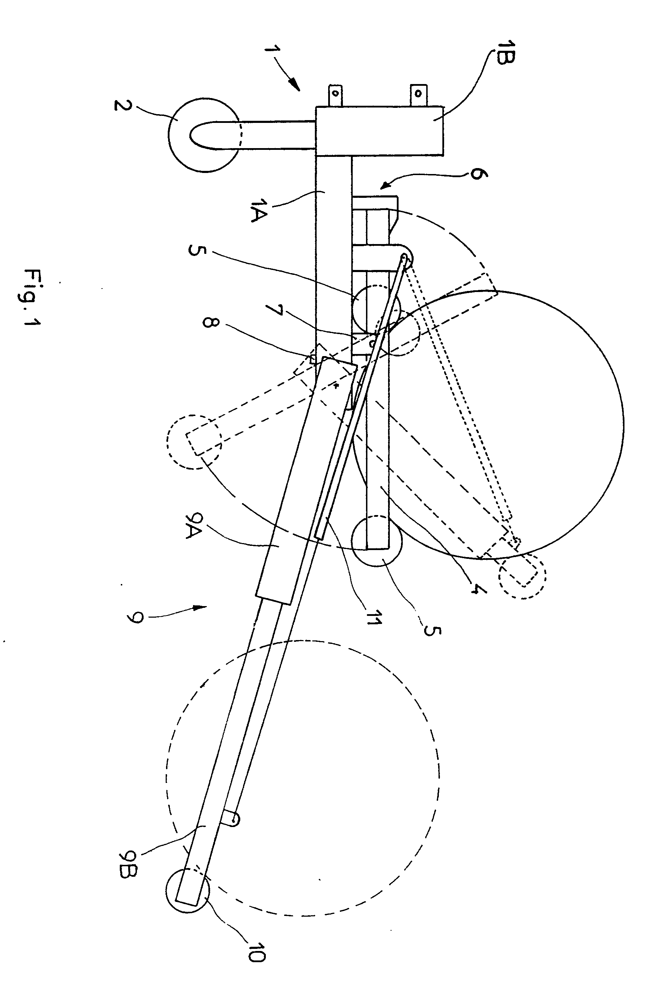

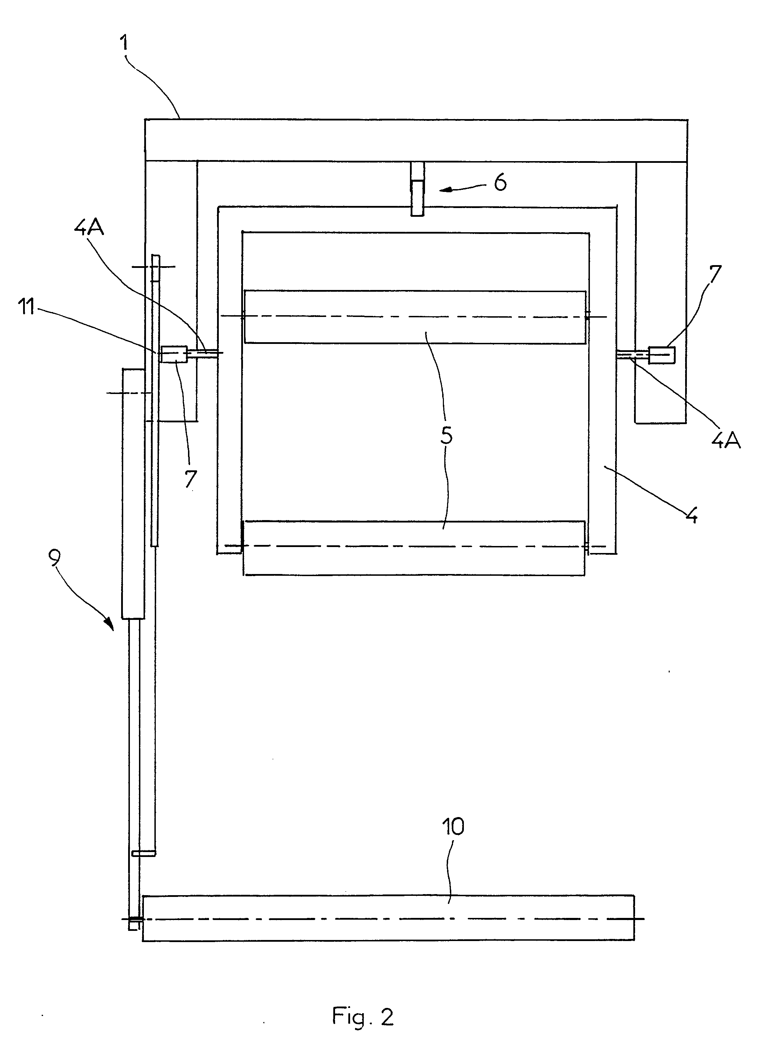

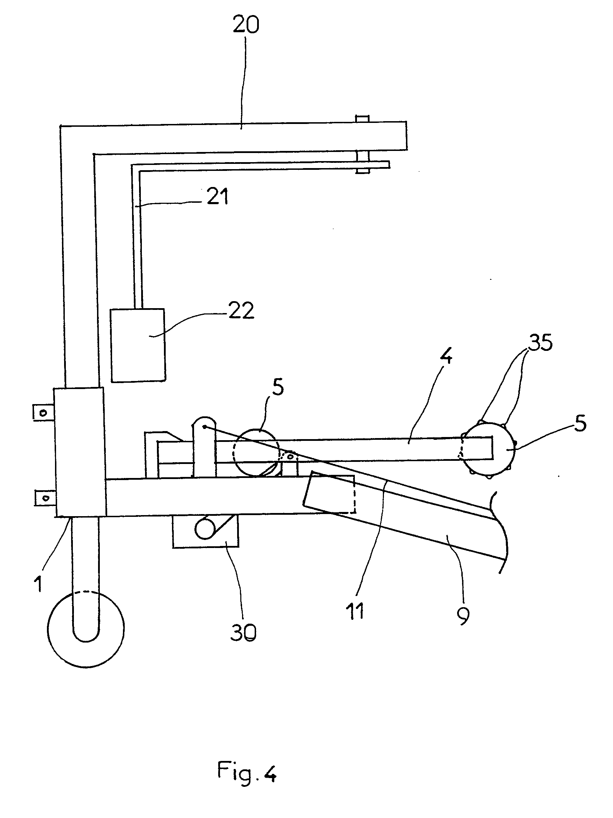

Tel que représenté aux figures 1 et 2, le dispositif selon l'invention est destiné à être monté sur un châssis 1 solidarisé à un véhicule tracteur soit par un système de fixation trois points arrières soit par un système de fixation frontal.

Le châssis présente un partie 1A se développant sensiblement parallèlement au sol en position de travail et destinée à recevoir le dispositif selon l'invention et une partie 1B sensiblement perpendiculaire à la précédente et dotée du système de fixation au véhicule tracteur.

Avantageusement, sous le châssis 1 peut être montée au moins une roue 2 d'appui au sol ou un rouleau soulageant le dit châssis des charges qu'il reçoit.

Le dispositif de chargement et de déchargement est constitué d'un berceau basculant 4 monté en articulation sur le châssis 1 et supportant par leurs extrémités deux rouleaux 5 parallèles espacés d'une distance inférieure au diamètre de la balle 3, d'au moins un moyen de verrouillage 6 du basculement du berceau 4 par rapport au châssis 1, d'un moyen de poussée et de blocage de la balle 3 contre au moins un rouleau 5 du berceau 4 placé en position basculée, d'un moyen d'actionnement du berceau 4, contre lequel est bloquée la balle 3, entre sa position basculée et sa position verrouillée pour le chargement de la dite balle et d'un moyen de retenue de la balle 3 sur le berceau

4 lors du basculement de ce dernier pour le déchargement de la dite balle.

Le berceau 4 est formé d'un cadre articulé sur le châssis 1.

L'axe d'articulation du berceau 4 sur le châssis 1 est parallèle à l'axe des rouleaux 5 portés par le dit berceau et est transversal au sens d'avancement du véhicule tracteur auquel est solidarisé le châssis 1.

Le berceau 4 est articulé sur le châssis 1 par deux tourillons 4A coaxiaux, latéraux et solidaires chacun d'un montant du berceau 4 et d'un longeron du châssis 1.

Préférentiellement, le berceau est disposé parallèlement au dessus du châssis 1 en position verrouillée.

A cet effet, les longerons du châssis 1 comportent chacun au dessus de leur face supérieure un palier 7 dans lequel se place l'extrémité d'un tourillon 4A du berceau 4.

L'autre extrémité du tourillon 4A est solidaire d'un montant du berceau 4.

On comprendra que les tourillons 4A sont solidaires des montants du berceau 4 parallèles l'un à l'autre et disposés parallèlement au sens d'avance du véhicule tracteur.

Entre ces montants portant les tourillons 4A sont montés les rouleaux 5.

Les dits rouleaux sont destinés à supporter la balle 3 chargée sur le berceau 4 et sont disposés dans un plan parallèle au châssis 1 lorsque le berceau 4 est verrouillé par rapport au dit châssis.

L'axe d'articulation du berceau 4 est disposé à proximité de l'extrémité du châssis 1 opposée à la portion 1B de ce dernier dotée du système de fixation au véhicule.

Le berceau basculant 4 en position basculée se dispose sensiblement en dehors du châssis 1 et de façon que les rouleaux 5 soient disposés dans un plan très incliné par rapport à l'horizontale.

Le basculement du berceau 4 est réalisé automatiquement lorsque le moyen de verrouillage 6 du berceau n'est plus actif.

A cet effet, l'axe d'articulation du berceau 4 sur le châssis 1 est décalé par rapport au plan médian du berceau 4 parallèle au dit axe d'articulation et en sorte que le berceau vienne par gravité en position basculée sensiblement en dehors du châssis 1.

Le basculement du berceau est également réalisé automatiquement lorsqu'une balle 3 repose sur les rouleaux 5 et que le moyen de verrouillage 6 est inactif.

A cet effet, l'axe d'articulation du berceau 4 par rapport au châssis est décalé et parallèle par rapport au plan médian entre les rouleaux 5 et en sorte que le berceau 4 vienne en position basculée sensiblement en dehors du châssis 1.

Le basculement du berceau 4 est donc obtenu par gravité du fait que le centre de gravité du dit berceau portant ou non une balle 3 est décalé par rapport à l'axe d'articulation du berceau 4 sur le châssis.

Suivant une variante de réalisation le berceau 4 est actionné en basculement par un vérin et est articulé sur le châssis 1 suivant un axe qui lui est médian.

Les rouleaux 5 sont d'une longueur supérieure à la longueur des balles 3 à charger en sorte que celles-ci reposent sur toute la longueur de leur génératrice sur les rouleaux 5.

Lorsqu'une balle 3 repose sur les rouleaux 5, ceux-ci ne subissent pas de porte à faux du fait qu'ils sont maintenus par leurs extrémités dans les montants parallèles du berceau 4.

Préférentiellement, le berceau 4 est dépourvu de traverse entre les extrémités des montants venant au plus près du sol en position basculée du dit berceau afin que le rouleau 5 proche de ces extrémités repose sur le sol.

Avantageusement, le châssis 1 est pourvu d'une butée 8 contre laquelle vient en appui le berceau 4 sur sa position basculée. Préférentiellement, les rouleaux 5 sont d'un diamètre supérieur à la hauteur des montants du berceau 4 en sorte d'être en saillie au dessus de celui-ci.

Pour le chargement d'une balle 3, le véhicule tracteur amène le châssis 1 au plus près de la balle à charger et de façon que l'axe de révolution de celle-ci soit parallèle aux rouleaux 5.

Le moyen de verrouillage 6 est rendu inactif et le berceau 4 bascule amenant ainsi un rouleau 5 en appui au sol.

Le dispositif selon l'invention est pourvu d'un moyen de poussée et de blocage de la balle 3 à charger contre au moins un rouleau 5 du berceau 4 placé en position basculée et d'un moyen d'actionnement du berceau 4 de sa position basculée vers sa position verrouillée, la balle 3 étant maintenue contre le ou les rouleaux 5 du dit berceau.

Le moyen de poussée et de blocage de la balle 3 à charger et le moyen d'actionnement du berceau 4 de sa position basculée vers sa position verrouillée sont constitués d'au moins un bras 9 parallèle aux longerons du châssis 1, articulé au dit châssis comportant au moins deux portions 9A et 9B mobiles l'une par rapport à l'autre, d'au moins un poussoir 10 monté transversalement à l'extrémité non articulée du bras 9 et destiné à venir en contact avec la balle 3 disposée entre lui même et le berceau 4 et d'au moins un élément 11 d'entraînement en mouvement du bras 9.

Le dispositif selon l'invention est doté d'un seul bras 9 sans que cela soit limitatif et préférentiellement disposé latéralement au châssis 1.

Selon une première forme de réalisation préférentielle représentée aux figures 1 et 2, le bras 9 est télescopique et les portions 9A et 9B sont mobiles en translation l'une par rapport à l'autre.

Selon une seconde forme de réalisation (non représentée) le bras 9 est repliable et les portions 9A et 9B sont mobiles angulairement l'une par rapport à l'autre et coopèrent en articulation.

L'axe d'articulation du bras 9 est parallèle à l'axe des rouleaux 5 du berceau 4 selon ces deux formes de réalisation.

Selon la première forme de réalisation, le bras 9 télescopique est doté d'une portion femelle 9A s'articulant au châssis 1 et d'une portion mâle 9B s'emboitant dans la portion femelle 9A et dotée en extrémité du poussoir 10.

Le poussoir 10 est constitué avantageusement d'un rouleau libre en rotation d'une longueur sensiblement équivalente à celle des rouleaux 5.

L'élément 11 d'entrainement en mouvement du bras 9 est constitué préférentiellement par un vérin. Le corps de ce vérin est articulé au châssis 1 et la tige du dit vérin est articulée sur l'extrémité du bras 9 portant le poussoir 10.

Les axes d'articulation du corps du vérin 11 sur le châssis 1, du bras 9 sur le dit châssis et de la tige du vérin sur l'extrémité du bras 9 forment les sommets d'un triangle déformable.

L'axe d'articulation du bras 9 au châssis 1 est toujours disposé en dessous de la droite reliant les axes d'articulation du corps du vérin 11 au châssis et de la tige du dit vérin à l'extrémité du bras 9.

Ainsi lorsque entre le poussoir 10 et le berceau 4 du dispositif selon l'invention est disposée une balle 3 à charger, le vérin 11 est actionné et provoque la rétraction du bras, ce qui a pour effet de pousser la balle 3 contre au moins un rouleau 5 du berceau 4.

Préférentiellement, le poussoir 10 repose sur le sol durant ce mouvement de rétraction du bras et est parallèle aux rouleaux 5. La fin de la rétraction du bras 9 correspond au contact et au blocage de la balle 3 contre au moins un rouleau 5 du berceau 4. Les portions 9A et 9B du bras 9 n'étant plus mobiles en translation, la poursuite de l'actionnement du vérin entraîne en rotation le bras 9 par rapport à son articulation sur le châssis.

La rotation du bras 9 et le blocage de la balle 3 par le poussoir 10 entraîne la rotation du berceau 4 jusqu'à sa position verrouillée parallèle au châssis 1.

Un détecteur de verrouillage du berceau 4 donne l'ordre d'arrêt au vérin 11, le poussoir 10 étant toujours en contact avec la balle 3.

Pour le déchargement de la balle 3, le moyen de verrouillage 6 est rendu inactif, ce qui entraîne le basculement du berceau 4 du fait du décalage de l'axe médian entre les rouleaux 5 par rapport à l'articulation du berceau 4 sur le châssis.

Cependant, afin d'éviter un basculement brutal du berceau 4 et donc une chute brutale de la balle 3, le dispositif selon l'invention est doté d'un moyen de retenue de la balle 3 lors du basculement du berceau 4. Ce moyen de retenue est constitué par le poussoir 10 du bras 9 et le moyen 11 d'entraînement du dit bras.

Le poussoir 10 pour le déchargement est amené en contact avec le balle 3 s'il en a été retiré. Une chambre du vérin 11 est placée en échappement limité en sorte que le dit vérin ait une fonction de freinage dans la rotation du bras 9 entraîné par le mouvement du berceau 4 et de la balle 3.

Cet effet de freinage est maintenu jusqu'à ce que le poussoir 10 vienne reposer sur le sol et donc lorsque la balle 3 repose également sur le sol.

Le vérin 11 est ensuite actionné pour développer le bras 9 et donc éloigner le poussoir de la balle 3.

Un détecteur peut être disposé entre le châssis 1 et le bras 9 pour déterminer la position du poussoir 10 et donner l'ordre au vérin 11 de développer le bras 9.

Afin de pouvoir amener le châssis 1 vers une autre balle 3 à charger, le poussoir 10 est mobile pour dégager le passage à la balle déchargée et à une autre balle à charger.

Le dégagement du poussoir 10 peut être effectué soit par rotation du dit poussoir autour du bras 9 soit par rotation du bras 9 complètement déployé afin de faire passer au dessus de la balle 3 le poussoir 10.

Selon la première solution, le poussoir 10 est solidaire d'un manchon articulé en rotation sur son axe sur l'extrémité du bras 9 et la tige du vérin 11 vient coopérer avec une came solidaire du manchon pour entraîner ce dernier en rotation et donc effacer le poussoir 10.

Selon l'autre solution, l'extrémité de la portion femelle 9A du bras 9 comporte une butée rétractable contre laquelle se bloque la portion mâle 9B en fin de course et une commande pour le retrait de la butée.

La butée rétractable lors du développement du bras 9 vient en saillie dans la portion femelle 9A lorsque l'extrémité de la portion 9 est passée à son niveau.

Pour effacer le poussoir 10, le vérin 11 entraîne en rotation le bras 9 qui ne peut pas se rétracter, le poussoir 10 passant au dessus de la balle 3.

Pour la remise en place du poussoir 10 en vue de charger une autre balle 3, le vérin 11 actionnant la portion 9B agit sur un détecteur qui commande le retrait de la butée.

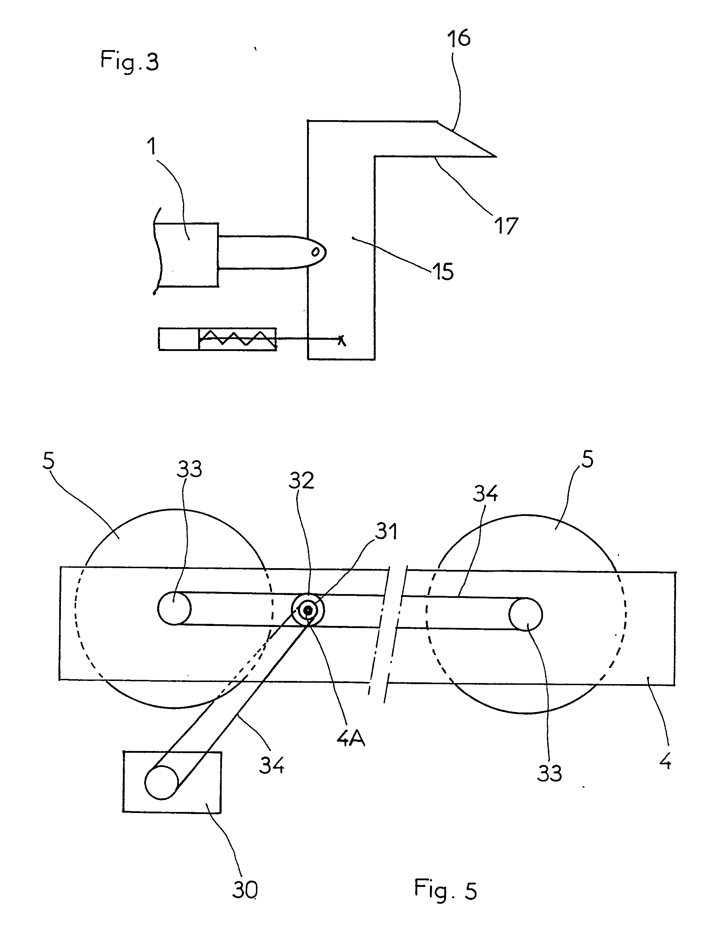

Le moyen de verrouillage 6 du berceau 4 sur le châssis 1, tel que représenté en figure 3, est constitué par au moins un crochet 15 articulé en rotation sur le châssis 1, par au moins un élément élastique de rappel et par au moins un organe d'actionnement en déverrouillage.

Le crochet 15 présente un pente 16 sur laquelle vient glisser le berceau 4 lors du verrouillage et une face 17 sous laquelle le berceau 4 est verrouillé.

L'élément élastique de rappel est un ressort de traction assurant le maintien du crochet en position verrouillée.

L'organe d'actionnement en déverrouillage peut être constitué par un vérin simple effet.

L'élément élastique de rappel et l'organe d'actionnement en déverrouillage peuvent être regroupés en un vérin simple effet à ressort monté entre le crochet 15 et le châssis 1.

Suivant la variante de réalisation selon laquelle le berceau 4 est actionné en basculement par un vérin et est articulé sur un axe qui lui est médian, le bras 9 et le vérin 11 peuvent être montés sur le berceau 4.

Suivant cette variante, le bras 9 et son poussoir 10 forment le moyen de poussée et de blocage de la balle à traiter contre les rouleaux 5 du berceau 4 placé en position basculée lors du chargement et le moyen de retenue de la dite balle lors du déchargement.

La mise en position horizontale et en position basculée du berceau 4 contre les rouleaux 5 duquel est bloqué la balle est effectuée par un vérin, la balle étant maintenue contre les rouleaux par le bras 9 et son poussoir 10 solidaires du berceau 4.

Le dispositif de chargement et de déchargement de balles 3 peut trouver son application en étant monté sur le châssis d'une machine à envelopper les balles avec un film autoadhésif de type connu tel que représenté en figure 4.

Cette machine comporte une potence 20 s'étendant au dessus du châssis et portant à son extrémité un bras coudé 21 rotatif portant un rouleau 22 de film autoadhésif.

Le rouleau 22 par la rotation du bras coudé 21 décrit une orbite circulaire autour de la balle 3.

Cette dernière doit être entraînée en rotation pour être totalement enveloppée.

A cet effet, au moins un rouleau 5 du berceau 4 est entraîné dans le dit berceau en rotation autour de son axe de révolution. Préférentiellement, les deux rouleaux 5 sont entraînés en rotation dans le même sens et les moyens d'entraînement en rotation de ceux-ci représentés en figure 5 sont constitués par un moteur 30 fixé au châssis, une couronne dentée 31 montée libre en rotation sur un tourillon 4A d'articulation du berceau 4 et entraînée en rotation par le moteur 30, un pignon 32 couplé à la couronne 31, deux roues dentées 33 montées chacune sur les extrémités des rouleaux 5 solidaires d'un même montant du berceau 4 placé du côté du tourillon 4A pourvu de la couronne 31 et du pignon 32 et coopérant avec le pignon 32.

La transmission du mouvement de rotation est réalisée par des chaînes 34 placées entre le moteur 30 et la couronne dentée 31 et entre le pignon 32 et les roues dentées 33.

Les vitesses de rotation des rouleaux 5 sont identiques.

Ces moyens d'entraînement en rotation ne gênent en rien le mouvement du berceau 4.

Avantageusement, au moins un rouleau 5 est pourvu sur sa surface et parallèlement à ses génératrices de saillies 35 radiales évitant le glissement du rouleau 5 sur la balle 3 pour assurer l'entraînement de celle-ci.

Suivant une variante, entre les rouleaux 5 peuvent être placées des bandes sans fin sur lesquelles repose la balle, dans ce cas, un seul rouleau 5 peut être entraîné.

Ces machines pour envelopper les balles 3 sont également équipées de façon connue d'un système de coupe et de retenue du film autoadhésif.

La ou les roues 2 ou le rouleau fixés sous le châssis 1 permettent l'enveloppement de la balle durant le transport en soulageant le châssis de la charge.

Le dispositif de chargement et de déchargement peut être utilisé également pour le transport des balles en vue de leur stockage et peut être monté sur tout autre type de machine dans lesquelles une manipulation des balles est nécessaire.

Le dispositif selon l'invention est de réalisation simple, présente un fonctionnement efficace et de manoeuvres aisées et évite de soumettre ses éléments à de trop fortes charges.

Il va de soi que la présente invention peut recevoir tous aménagements et toutes variantes dans le domaine des équivalents techniques sans pour autant sortir du cadre de la présente demande.

**Revendications**

1. Dispositif de chargement et de déchargement de balles (3) cylindriques de fourrage ou de paille destiné à être monté sur un châssis (1) solidarisé à un véhicule tracteur, caractérisé en ce qu'il est constitué d'un berceau (4) basculant monté en articulation sur le châssis (1) et supportant par leurs extrémités deux rouleaux (5) parallèles espacés d'une distance inférieure au diamètre de la balle (3) à charger, d'au moins un moyen de verrouillage (6) du basculement du berceau (4) par rapport au châssis (1), d'un moyen de poussée et de blocage de la balle (3) contre au moins un rouleau (5) du berceau (4) placé en position basculée, d'un moyen d'actionnement du berceau (4), contre lequel est bloqué la balle (3), entre sa position basculée et sa position verrouillée pour le chargement de la dite balle et d'un moyen de retenue de la balle (3) sur le berceau (4) lors du basculement de ce dernier pour le déchargement de la dite balle.

2. Dispositif selon la revendication 1 caractérisé en ce que l'axe d'articulation du berceau (4) sur le châssis (1) est parallèle à l'axe des rouleaux (5) et est transversal au sens d'avancement du véhicule tracteur auquel est solidarisé le châssis (1).

3. Dispositif selon la revendication 1 caractérisé en ce que l'axe d'articulation du berceau (4) sur le châssis (1) est décalé par rapport au plan médian du berceau (4) parallèle au dit axe d'articulation en sorte que le berceau (4) vienne en position basculée sensiblement en dehors du châssis (1).

4. Dispositif selon la revendication 1 caractérisé en ce que l'axe d'articulation du berceau (4) sur le châssis (1) est décalé et parallèle par rapport au plan médian entre les rouleaux (5) et en sorte que le berceau (4) vienne en position basculée sensiblement en dehors du châssis (1).

5. Dispositif selon la revendication 1 caractérisé en ce que le moyen de poussée et de blocage de la balle (3) à charger contre au moins un rouleau (5) du berceau (47) et le moyen d'actionnement du dit berceau de sa position basculée vers sa position verrouillée sont constitués par au moins un bras (9) parallèle aux longerons du châssis (1), articulé au dit châssis et comportant au moins deux portions (9A) et (9B) mobiles l'une par rapport à l'autre, d'au moins un poussoir (10) monté transversalement à l'extrémité non articulée du bras (9) et destiné à venir en contact avec la balle (3) disposée entre lui même et le berceau (4) et d'au moins un élément (11) d'entraînement en mouvement du bras (9).

6. Dispositif selon la revendication 5 caractérisé en ce que le bras (9) est télescopique et les portions (9A) et (9B) sont mobiles en translation l'une par rapport à l'autre.

7. Dispositif selon la revendication 5 caractérisé en ce que le bras (9) est repliable et les portions (9A) et (9B) sont mobiles angulairement l'une par rapport à l'autre et coopèrent en articulation.

8. Dispositif selon les revendications 5 et 6 caractérisé en ce que l'élément (11) d'entraînement est constitué d'un vérin dont le corps est articulé au châssis (1) et l'extrémité de la tige est articulée à l'extrémité du bras (9) portant le poussoir (10), en ce que les axes d'articulation du corps du vérin sur le châssis (1), du bras (9) sur le dit châssis et de la tige du vérin sur le bras (9) forment les sommets d'un triangle déformable et en ce que l'axe d'articulation du bras (9) sur le châssis (1) est disposé en dessous de la droite reliant les axes d'articulation du vérin au châssis (1) et de la tige du dit vérin au bras (9).

9. Dispositif selon les revendications 1 et 5 caractérisé en ce que le moyen de retenue de la balle (3) lors du basculement du berceau (1) pour le déchargement de la dite balle est constitué par le poussoir (10) du bras (9) et le moyen (11) d'entraînement du dit bras.

10. Dispositif selon la revendication 5 caractérisé en ce que le poussoir (10) est mobile pour dégager le passage à la balle (3) déchargée et à une autre balle (3) à charger.

11. Dispositif selon la revendication 1 caractérisé en ce que le moyen de verrouillage (6) est constitué par au moins un crochet (15) articulé en rotation sur le châssis (1), par au moins un organe élastique de rappel placé entre le crochet (15) et le châssis (1) et par au moins un organe d'actionnement en déverrouillage du crochet (15).

12. Dispositif selon la revendication 1 caractérisé en ce que sous le châssis (1) est montée au moins une roue (2) d'appui au sol.

13. Dispositif selon les revendications 1, 2 caractérisé en ce que le berceau (4) est actionné par un vérin et est articulé sur le châssis (1) sur un axe qui lui est médian.

14. Dispositif selon les revendications 6, 8, 9, 10 et 13 caractérisé en ce que le bras (9) doté du poussoir (10) et le vérin (11) sont solidaires du berceau (4).

15. Dispositif selon les revendications précédentes prises dans leur ensemble caractérisé en ce qu'il est monté sur le châssis d'une machine pour envelopper les balles (3) de paille ou de fourrage d'un film autoadhésif.

16. Dispositif selon la revendication 15 caractérisé en ce que les rouleaux (5) du berceau (4) sont entraînés en rotation dans le même sens pour entraîner la balle (3), qu'ils supportent en rotation autour de son axe de révolution.

Fig. 1

Fig. 2

Fig. 4

Fig.3

Fig. 5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | GB-A-2159489 (EIGHT MILIEU NOMINEES)<br>* page 1, ligne 77 - page 2, ligne 40; figures 1-4 * | 1, 2, 3, 4, 5, 10, 15, 16 | A01F15/08<br>A01D87/12<br>A01D90/08 |
| A | DE-A-3347220 (BUSATIS WERKE)<br>* page 12, ligne 24 - page 17, ligne 31; figures 1-4 * | 1, 2, 3, 5, 9 | |
| A | FR-A-2445100 (OMAS)<br>* page 2, ligne 29 - page 5, ligne 31; figures 1-9 * | 1, 5, 6, 7, 8, 10 | |
| A | EP-A-0110110 (MANULI)<br>* page 5, ligne 15 - page 12, ligne 6; figures 1-11 * | 1, 2, 3, 4, 15, 16 | |
| A | US-A-4056204 (SPASUIK) | | |

**DOMAINES TECHNIQUES RECHERCHES (Int. Cl.5)**

A01F
A01D

Le présent rapport a été établi pour toutes les revendications

| Lieu de la recherche | Date d'achèvement de la recherche | Examinateur |
|---|---|---|
| LA HAYE | 11 JUILLET 1990 | VERMANDER R.H. |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

 

& : membre de la même famille, document correspondant

EPO FORM 1503 03.82 (P0402)